# EUROPEAN PATENT APPLICATION

(11) **EP 1 178 665 A2**
(43) Date of publication of application: **06.02.2002**
(21) Application number: 01306249.2
(22) Date of filing: 20.07.2001
(51) Int. Cl.: H04N 1/23

(54) **Optical scanner and image reader including one and two dimensional symbologies at variable depth of field**

(30) Priority: 28.07.2000 US 628222
(71) Applicant: Roustaei, Alexander R., La Jolla, CA 92037 (US)
(72) Inventor: Roustaei, Alexander R., La Jolla, CA 92037 (US)
(74) Representative: Beck, Simon Antony

(57) **Abstract**

An integrated system and method for reading image data. An optical scanner/image reader is provided for reading images and decoding optical information or code, including one and two dimensional symbologies at variable depth of field, including memory and image processing for high speed applications. In a disclosed example, an image processor uses key thresholds to quickly and efficiently generate a binary image from a multi-bit image. The key threshold may be derived from a portion of the image data, thereby enabling the image processor to generate binary data as image data is being received.

## Description

This application is a continuation-in-part of U.S patent application serial number 09/073,501 filed May 5, 1998 and similarly titled, now issued as U.S. patent no. on , which claims priority from Provisional Application Ser. No. 60/045,542, filed May 5, 1997, entitled, "Optical Scanner/Image Reader for Reading Images and Decoding Optical Information or Code, Including One and Two Dimensional Symbologies at Variable Depth of Field, Including Memory and Image Processing for High Speed Applications," both of which are incorporated herein by reference.

### Field of the Invention

This invention generally relates to a scanning or imaging system for reading and analyzing optically encoded information or images and more particularly to a system with intelligence for grabbing, analyzing and/or processing images within a frame.

### Background of the Invention

Many industries, including the assembly processing, grocery and food processing industries, transportation, and multimedia industries, utilize an identification system in which the products are marked with an optical code (such as a bar code symbol consisting of a series of lines and spaces of varying widths, or other type of symbols consisting of series of contrasting markings, generally known as two dimensional symbology). A number of different optical code readers and laser scanning systems have been developed to decode the optical pattern to a multiple digit representation for inventory, production tracking, check out or sales. Some of optical reading devices are also used to take pictures and display, store or transmit real time images to another system.

Optical readers or scanners are available in a variety of configurations, some of which are built into a fixed scanning station and others of which are portable. The portability of an optical reading device provides a number of advantages, including the ability to inventory products on shelves and to track portable items such as files or small equipment. A number of these portable reading devices incorporate laser diodes which permit the user to scan the symbology at variable distances from the surface on which the optical code is imprinted. A disadvantage of known laser scanners is that they are expensive to manufacture and do not provide the ability to reproduce the image of the targeted area by the sensor and therefore limits the field of use of optical code reading devices. Additionally laser scanners typically require a raster scanning technique to read and decode a two dimensional optical code.

Another type of optical code reading device, generally known as scanner or imager, which can be incorporated into a portable system uses light emitting diodes (LEDs) as a light source and charge coupled devices (CCD) or Complementary metal oxide silicon (CMOS) sensors as detectors. This class of scanners or imagers is generally known as "CCD scanners" or "CCD imagers." CCD scanners take a picture of the optical code and stores the image in a frame memory, which is then scanned electronically, or processed using software to convert the captured image into an output signal.

While CCD scanners have the advantage of being less expensive to manufacture, some prior scanners were limited to scanning the optical code by either contacting the surface on which the optical code is imprinted or maintaining a distance of no more than one and one-half inches away from the optical code, which creates a further limitation in that it cannot read optical code any bigger than the window or housing width of the reading device. For example, the CCD scanner disclosed in United States Patent No. 5,291,009 disclosed the ability to read symbologies which are wider than the physical width and height of the scanner housing at distances as much as twenty inches from the scanner or imager. This added versatility to CCD scanners which previously were limited to contact and close range, now allowing the CCD scan engines or imagers to be incorporated in fixed scanner systems, such as are used at retail checkout counters.

Considerable attention has been directed toward the scanning of two-dimensional symbologies, which can store about 100 times more information in the same space occupied by a one-dimensional symbology. In two-dimensional symbologies, rows of lines and spaces are either stacked upon each other or they form matrix of black and white square, rectangular or hexagon cells. The symbologies or the optical codes are read by scanning a laser across each row, in the case of stacked symbology, in succession in a zigzag pattern. A disadvantage of this technique is that it introduces the risk of loss of vertical synchrony due to the time required to scan the entire optical code. It also has the disadvantage of requiring a laser for illumination and moving part for generating the zigzag pattern, in order to scan the entire symbology, which makes the scanner more expensive and less reliable due to mechanical parts.

In all types of optical codes, *i.e.,* one-dimensional, two-dimensional and even three- dimensional (multi-color superimposed symbologies), the performance of the optical system needs to be optimized to provide the best possible resolution, signal-to-noise ratio, contrast and response. These and other parameters are controllable by selection of, and adjustments to, the optical components, e.g., lens system, the wavelength of illuminating light, the optical and electronic filtering, and the detector sensitivity.

Using known, conventional image processors, the sensor typically generates multi-bit image data, which may represent gray-scale information. Current techniques decode the multi-bit, gray scale information using complex processing techniques and algorithms. These techniques are time consuming, leading to delays in processing and symbol recognition time. To speed processing, it is generally known to use a Digital Signal Processor or other processing accelerator to speed processing. However, these accelerating devices add considerable expense to current devices, and also will suffer from slow response as the resolution and pixel density of sensors is increased. For example, it is likely that sensors will continue to increase in resolution from the current standard to megapixel sensors, and will continue to increase resolution in response to advancements in image technology. Such increases in pixel resolution dramatically increase the quantity of pixels that must be processed, and associated time to decode symbology in the image data. Therefore, there is a need for a process to speed the analysis of gray-scale information.

A further disadvantage of scanning two-dimensional symbologies is that it takes an increased amount of time and image processing power to capture the image and process it, *i.e*., increased microcomputer memory and faster duty-cycle processor.

Another disadvantage of known apparatus for scanning symbologies is that the high-speed processing chips they require are costly, generate heat and occupy space.

Accordingly, there is a need for, and it is an object of the invention to provide a system for scanning symbologies that integrates the necessary components onto a single chip or a reduced number of chips. It is also an object of the present invention to reduce the amount of on-board memory and to provide a system requiring a reduced amount of power and having a lower level of heat generation.

A further object of the invention is to provide a scanning or imaging device employing a high quality and high speed image processing system, including image grabbing, image processing and decoding functions, of the target symbology or optical code.

Another object of the invention is to provide scanners or imagers having variable depth of field with means for aiding an operator in framing symbology, *i.e.,* targeted area, so that is captured in the appropriate field of view.

A further object of the invention is to provide an imaging device able to scan a plurality of symbologies within one optically scanned image field, and then separate or segment the image field into individual symbology fields at high speed.

### Summary of the Invention

These and other objects and advantages are achieved in the present invention by providing a preferably integrated system for scanning target images and processing them, preferably in real time commencing during the scanning process. In one embodiment, an optical scanning head is provided that includes one or more light emitting diodes (LEDs) mounted on each side of a printed circuit board to emit light at different angles. A diverging beam of light is created.

A progressive scanning CCD is provided in which data can be read one line after another and placed into a memory or register. In a particular example, the image processing apparatus is configured to provide nearly simultaneous binary and gray-scale data. In another example, the image processing apparatus preferably identifies an area of interest and the type and nature of the optical code or information existing within the frame as the data is being read.

In one embodiment, the present invention provides an optical reading device for reading optical codes and one or more, one- or two- dimensional symbologies contained within a target image field having a first width, wherein said optical reading device includes at least one printed circuit board having a front edge with a second width, illumination means (using a coherent or incoherent light, in visible or invisible spectrum) for projecting an incident beam of light onto said target image field and said optical reading device further including an optical assembly comprising a plurality of lenses disposed along an optical path for focusing reflected light at a focal plane, said optical reading device further including sensor means within said optical path, said sensor mean including a plurality of pixel elements for sensing illumination level of said focused light, and said optical reading device further including processing means for processing said sensed target image to obtain an electrical signal proportional to said illumination levels and output means for converting said electrical signal into output data, said output data describing a gray scale illumination level for each pixel element that is directly relatable to discrete points within said target image field, and said processing means having a communication means for communicating with a host computer or another unit designated to use the data collected and or processed by the optical reading device, a combination comprising memory means in communication with the processor; machine-executed means coupled with the memory, processor and glue logic for controlling said optical reading device and processing the targeted image onto sensor to provide decoded data, raw, stored or life image, representing the optical image targeted onto the sensor.

In accordance with the present invention, individual fields are decoded and digitally scanned back onto the image field. This increases throughput speed of reading symbologies. An example where fast throughput is required is that of processing moving packages with symbologies containing information being attached or imprinted thereon called high speed sortation which can be at a speed of 200 feet or higher, per minute.

In another example of the present invention, image data is segmented into portions, with a threshold determined for each portion. Accordingly, the multi-bit imagery data can be more efficiently and quickly converted into binary data. Further, by removing extreme image values, less image information is lost and the image processor becomes less susceptible to disturbances.

Another advantage of the present invention is that the image containing information can be located at variable distances from the reading device using LED light source, ambient or flash light in conjunction with specialized smart sensors which has on-chip signal processing means to provide raw picture or decoded information contained in a frame having the a real time image processing capability.

Another advantage of the present invention is to provide an optical reading device which can capture in a single snap shot and decode one- and two-dimensional symbols, optical codes and images.

Another advantage of the present invention is to provide an optical reading device to decode optical codes having a wide range of feature sizes.

Another advantage of the present invention is to provide an optical reading device which can read optical codes omnidirectionally.

Another advantage of the present invention is providing all of the above advantages in an optical reading device, and including a microcomputer and image processing software in an ASIC or FPGA.

Another advantage of the present invention is providing all of the above advantages in an optical reading device, and including a microcomputer which include microprocessor, memory and memory buffer, ADC, and image processing software in an ASIC or FPGA, all on the same chip .

Another advantage of the present invention is providing all of the above advantages in an optical reading device, while efficiently using the microcomputer's memory and other integrated sub-system, without burdening its central processing unit while efficiently conserving power.

Another advantage of the present invention is providing all of the above advantages in an optical reading device, while increasing processing speed and image processing quality and while providing the ability to segment a plurality of images from the same image field for high throughput speed.

Another advantage of the present invention is providing all of the above advantages in an optical reading device, in a form of engine or finished product while most or all of the electronic functions are integrated in the same piece of silicon.

These and other features and advantages of the present invention will be appreciated from review of the following detailed description of the invention, along with the accompanying figures in which like reference numerals refer to like parts throughout.

### Brief Description of the Drawings

FIG. 1(a) is a diagram illustrating an embodiment in accordance with the present invention;
FIG. 1(b) illustrates a target to be scanned in accordance with the present invention;
FIG. 1(c) illustrates image data corresponding to the target, in accordance with the present invention;
FIG. 2(a) is a diagram of an embodiment in accordance with the present invention;
FIG. 2(b) illustrates an example of a floating threshold curve used in an embodiment of the present invention;
FIG. 2(c) illustrates an example of vertical and horizontal line threshold values, such as used in conjunction with mapping a floating threshold curve surface, as illustrated in FIG. 2(b) an embodiment in accordance with the present invention;
FIG. 3(a) is a diagram of an apparatus in accordance with the present invention;
FIG. 3(b) illustrates clock signals as used in an embodiment of the present invention;
FIG. 4 illustrates a laser light illumination pattern and apparatus, using a holographic diffuser, in accordance with the present invention;
FIG. 5 illustrates a framing locator mechanism utilizing a beam splitter and a mirror or diffractive optical element that produces two spots in accordance with the present invention;
FIG. 6 is a diagram illustrating an alternative apparatus for framing a target in accordance with the present invention;
FIG. 7(a) illustrates an embodiment of an imaging apparatus in accordance with the present invention;
FIG. 7(b) illustrates a generated pattern of a frame locator in accordance with the present invention;
FIG. 8(a) is a diagram illustrating an apparatus in accordance with the present invention;
FIG. 8(b) illustrates an embodiment of the present invention showing a system on a chip in accordance with the present invention;
FIG. 8(c) illustrates a flow diagram in accordance with the present invention;
FIG. 8(d) is a block diagram illustrating an embodiment in accordance with the present invention;
FIG. 8(e) is a block diagram illustrating some of the steps in a gray scale image processing technique in accordance with the present invention;
FIG. 8(f) illustrates pixel projection with respect to the scan line in accordance with the present invention;
FIG. 9 is an illustration of a portion of image data in accordance with the present invention;
FIG. 10 is an illustration of overlapping segments of image data in accordance with the present invention;
FIG. 11 is a histogram of image data in accordance with the present invention;
FIG. 12 is a graph of sorted image data in accordance with the present invention;
FIG. 13 is a graph of large and small image data in accordance with the present invention; and
FIG. 14 is an illustration of a sorting routine in accordance with the present invention .

### Detailed Description of the Invention

Referring to the figures, the present invention provides an optical scanner or imager 15 for reading optically encoded information and symbols, which also has a picture taking feature and picture storage memory 21 for storing the pictures. In this description, "optical scanner", "imager" and "reading device" will be used interchangeably for the integrated scanner on a single chip technology described in this description.

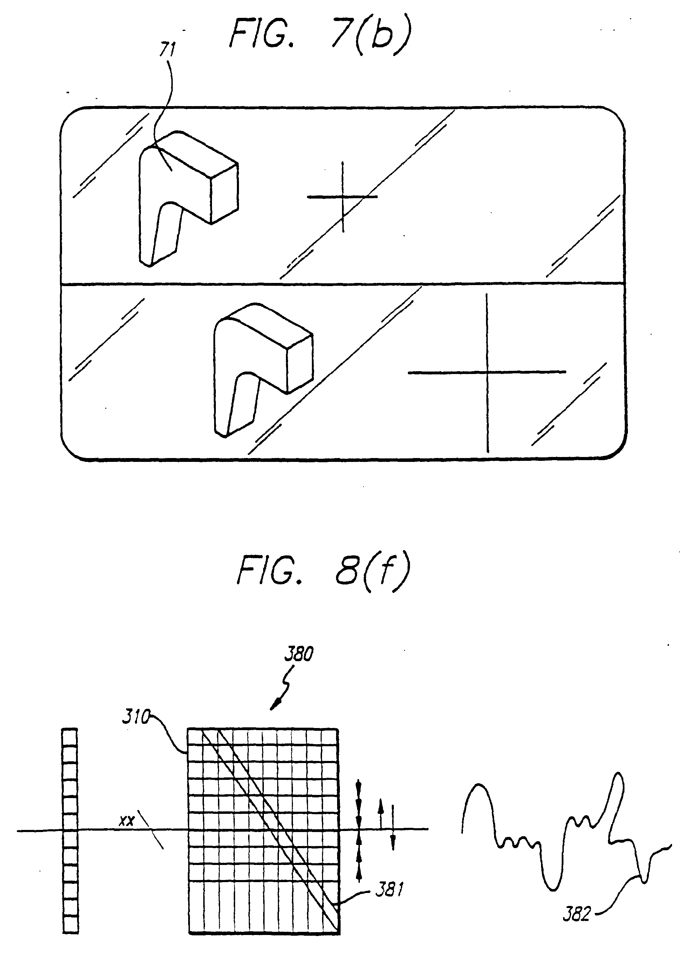

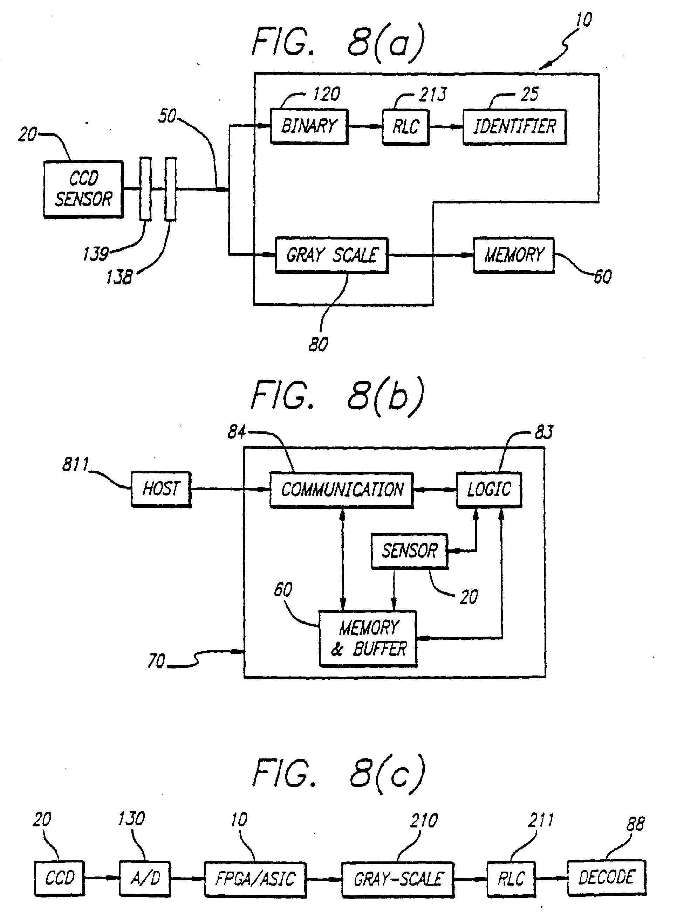

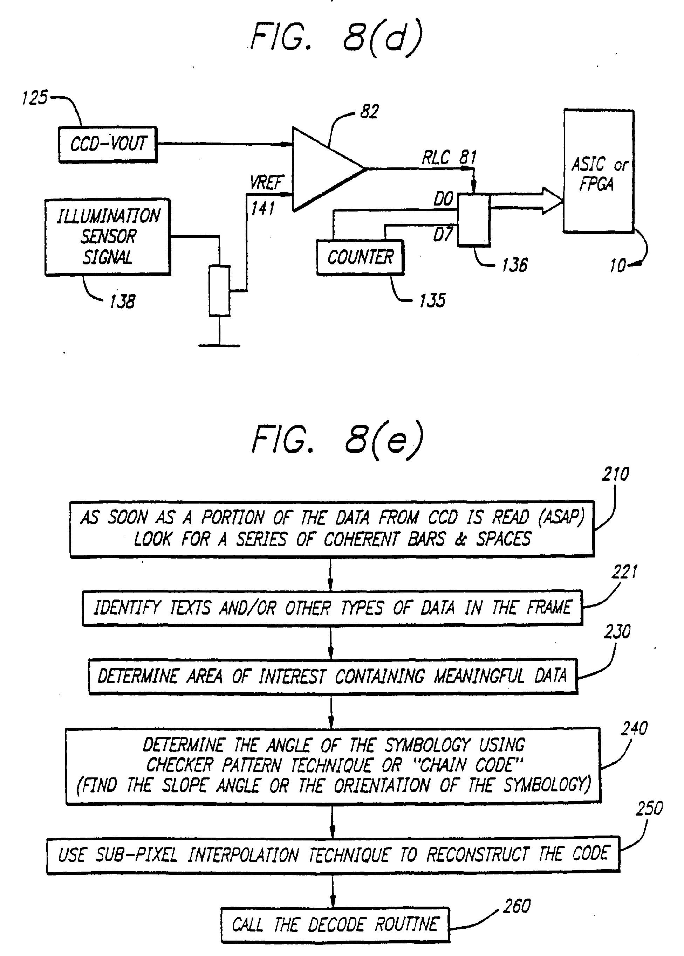

The optical scanner or imager 15 of the present invention preferably includes a transmission system for conveying images via a communication interface as shown in FIG. 8(b) to another receiving unit, such as a host computer 811. The communications interface 84 may provide for any form of transmission of data, such as such as cabling, infra-red transmitter/receiver, RF transmitter/receiver or any other wired or wireless transmission system.

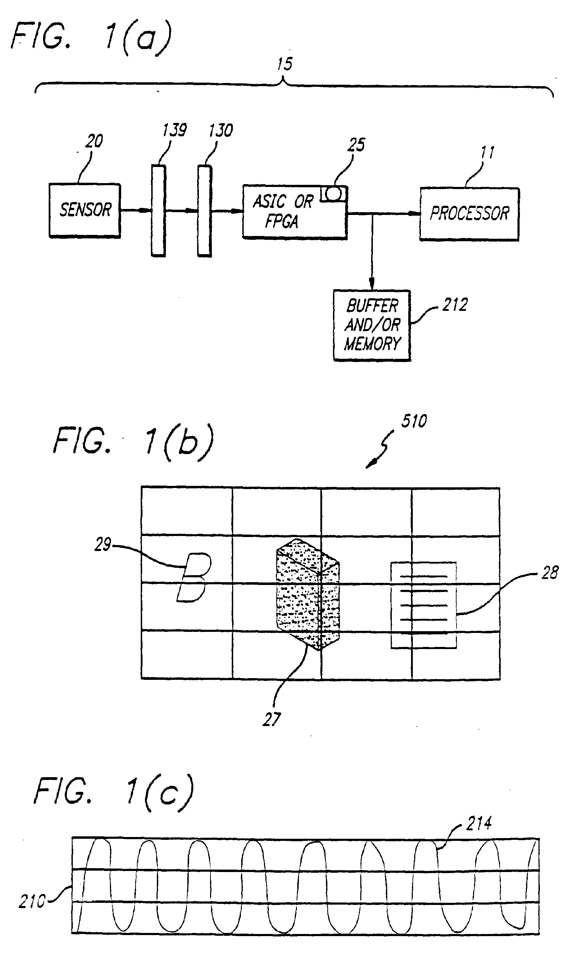

FIG. 1(b) illustrates a target 510 to be scanned in accordance with the present invention. The target includes a one-dimensional image 28, two-dimensional image 27 and text 29. These are examples of the type of information to be scanned. FIG. 1(c) also illustrates an image or frame 210, which represents digital data corresponding to the scanned target 510. As shown in FIG. 1(c), the image or frame, preferably includes data corresponding to a plurality of screen pixels 214, although it should be understood that any form of data corresponding to scanned target 510 may be used. It should also be understood that in this application, the terms "image" and "frame" are used to indicate a region being scanned.

In operation, the target 510 can be located at any distance from the optical reading device 15, so long as it is with in the depth of field of the imaging device 15. Any form of light source providing sufficient illumination may be used. For example, an LED light source 72, ambient light or strobe light 720 may be used. As shown in FIG. 8(b), these may be used in conjunction with specialized smart sensors 20, which has on-chip sensor 20 and signal processing means to provide raw picture or decoded information corresponding to the information contained in a frame or image 210 to the host computer 811. The optical scanner 15 preferably has real time image processing technique capabilities, using one or a combination of the methods and apparatus discussed in more detail below, providing improved scanning abilities.

### Hardware Image Processing

Various forms of hardware-based image processing may be used in the present invention. One such form of hardware-based image processing utilizes active pixel sensors. Another form of hardware-based image processing is a Charge Modulation Device (CMD) in accordance with the present invention. A preferred CMD provides at least two modes of operation, including a skip access mode and a block access mode for utilization in real-time framing and focusing with an optical scanner 15. It should be understood that in this configuration, the optical scanner 15 is serving as a digital imaging device or a digital camera. These modes of operation become specifically useful when the sensor 20 is employed in systems that read optical information (including one and two dimensional symbologies) or process images *i.e.,* inspecting products from the captured images as such uses typically require a wide field of view and the ability to make precise observations of specific areas. Preferably, the CMD sensor 20 packs a large pixel count (more than 600x500) and provides three scanning modes, including full-readout mode, block-access mode, and skip-access mode. The full-readout mode delivers high-resolution images from the sensor 20 in a single readout cycle. The block-access mode provides a readout of any arbitrary window of interest facilitating the search of the area of interest (a very important feature in fast image processing techniques). The skip-access mode reads every "n/th" pixel in horizontal and vertical directions. Both block and skip access modes allow for real-time image processing and monitoring of partial and a whole image. Electronic zooming and panning features with moderate and reasonable resolution, also are feasible with the CMD sensors without requiring any mechanical parts.

FIG. 1(a) illustrates a system having a glue logic chip or programmable gate array 10, which also will be referred to as ASIC or FPGA 10. The ASIC or FPGA 10 preferably includes image processing software stored in a permanent memory therein. For example the ASIC or FPGA 10 preferably includes a buffer 212 or other type of memory and/or a working RAM memory providing memory storage. A relatively small size (such as around 40K) memory can be used, although any size can be used as well. As target 510 is read by sensor 20, image data 210 corresponding to the target 510 is preferably output in real time by the sensor. The read out data preferably indicates portions of the image 210, which may contain useful data distinguishing between, for example, one dimensional symbologies (sequences of bars and spaces), text (uniform shape and clean gray), and noise (depending to other specified feature *i.e.,* abrupt transition or other special features). Preferably, as soon as the sensor 20 read of the image data is completed, or shortly thereafter, the ASIC 10 outputs indicator data 25. The indicator data 25 includes data indicating the type of optical code (for example one or two dimensional symbology) and other data indicating the location of the symbology within the image frame data 210. As a portion of the data is read (preferably around 20 to 30%, although other proportions may be selected as well) the ASIC 10 (software logic implemented in the hardware) can start a gray scale image processing in parallel with the Sensor 20 data transfer (called "Real Time Image Processing"). This can happen either at some point during data transfer from Sensor 20, or afterwards. This process is described in more detail below in the Gray Scale Image Processing section of this description.

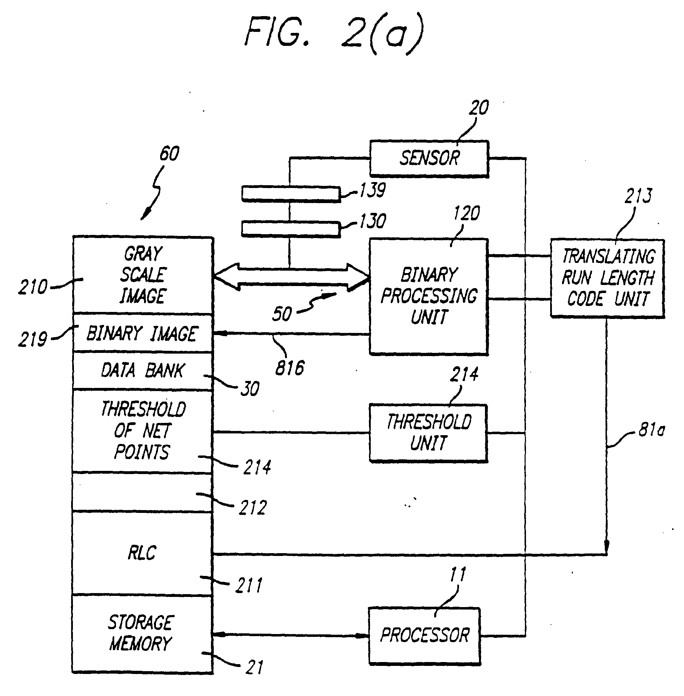

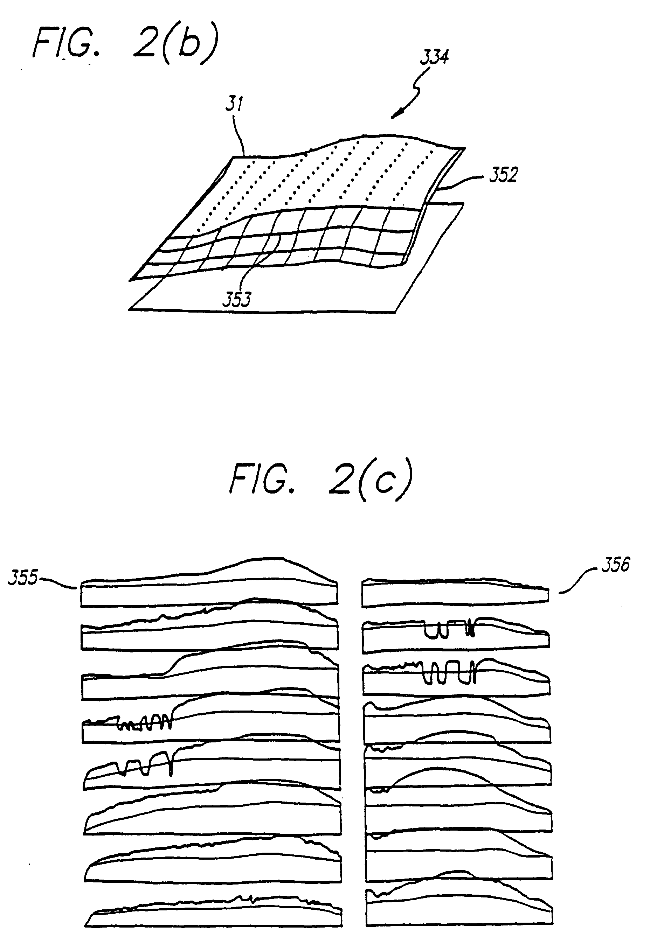

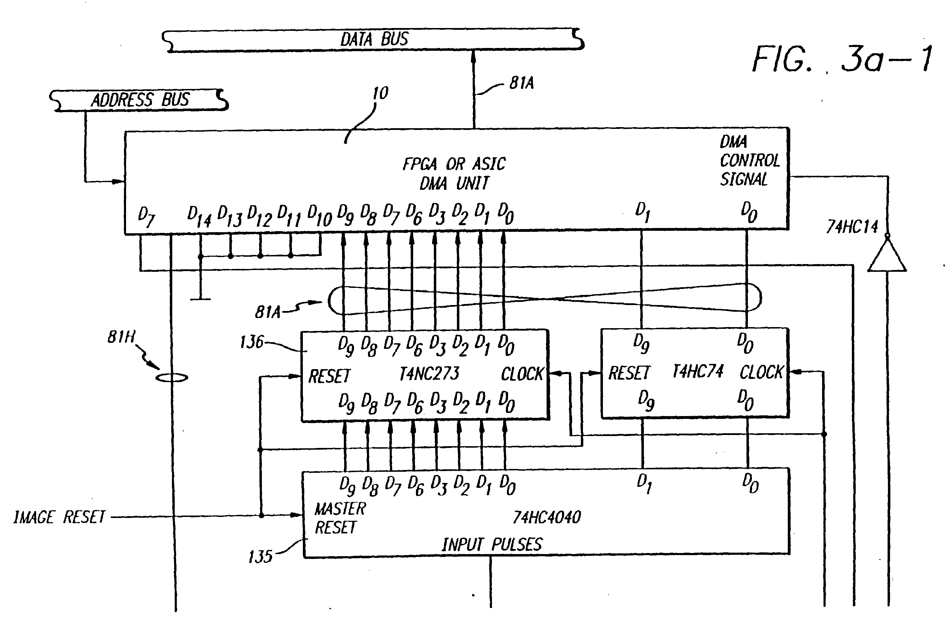

During image processing, or as data is read out from the sensor 20, the ASIC 10, which preferably has the image processing software encoded within its hardware memory, scans the data for special features of any symbology or the optical code that an image grabber is supposed to read through the set-up parameters. (For instance if a number of Bars and Spaces together are observed, it will determine that the symbology present in the frame 210 may be a one dimensional or a PDF symbology or if it sees organized and consistent shape/pattern it can easily identify that the current reading is text). Before the data transfer from the CCD 20 is completed the ASIC 10 preferably has identified the type of the symbology or the optical code within the image data 210 and its exact position and can call the appropriate decoding routine for the decode of the optical code. This method increases considerably the response time of the optical scanner 15. In addition, the ASIC 10 (or processor 11) preferably also compresses the image data output from the Sensor 20. This data may be stored as an image file or databank, such as in memory 212, or alternatively in on-board memory within the ASIC 10. The databank may be stored at a memory location indicated diagrammatically in FIG. 2(a) with box 30. The databank preferably is a compressed representation of the image data 210, having a smaller size than the image 210. In one example, the databank is 5-20 times smaller than the corresponding image data 210. The databank is used by the image processing software to locate the area of interest in the image without analyzing the image data 210 pixel by pixel or bit by bit. The databank preferably is generated as data is read from the sensor 20. As soon as the last pixel is read out from the sensor (or shortly thereafter), the databank is also completed. By using the databank, the image processing software can readily identify the type of optical information represented by the image data 210 and then it may call for the appropriate portion of the processing software to operate, such as an appropriate subroutine. In one embodiment, the image processing software includes separate subroutines or objects associated with processing text, one-dimensional symbologies and two-dimensional symbologies, respectively.

In a preferred embodiment of the invention, the imager is a hand-held device. A trigger (not shown) is depressible to activate the imaging apparatus to scan the target 510 and commence the processing described herein. Once the trigger is activated, the illumination apparatus 72 or 720 are optionally activated to illuminate the image 210. Sensor 20 reads in the target 510 and outputs corresponding data to ASIC or FPGA 10. The image 210, and the indicator data 25 provide information relative to the image content, type, location and other useful information for the image processing to decide on the steps to be taken. Alternatively, the compressed image data may be used to also or alternatively provide such information. In one example if the image content is a DataMatrix® two-dimensional symbology, the identifier will be positioned so that the image processing software understand that the decode software to be used in this case is a DataMatrix® decoding module and that the symbology is located at a location, reference by X and Y. After the decode software is called, the decoded data is outputted through communication interface 84 to the host computer 811.

In one example, for a CCD readout time of approximately 30 mS for a 500x700 pixels CCD (approximately) the total Image Processing time to identify and locate the optical code would be around 33 mS, meaning that almost instantly after the CCD readout the appropriate decoding software routine could be called to decode the optical code in the frame. The measured decode time for different symbology depend on their decoding routines and decode structures. In another example, experimentation indicated that it would take about 5mS for a one-dimensional symbology and between 20 to 80 mS for a two dimensional symbology depending on their decode software complexity.

FIG. 8(a) shows a flow chart illustrating processing steps in accordance with these techniques. As illustrated in FIG. 8(a), data from the CCD sensor 20 preferably goes to SH (sample and hold) circuit 139 and ADC (analog to digital converter) circuit 130 and then to the ASIC 10, in parallel to its components the gray scale processor 80 and the series of binary processor 120 and run length code processor 213. The RLC processor 213 generates indicator data 25, which either is stored in ASIC 10 (as shown), or can be copied into memory 60 for storage and future use. The gray scale processor 80 outputs pertinent gray scale image data 210 to a memory 60, such as an SDRAM.

Another system for high integration is illustrated in FIG. 8(b). This preferred system can include the CCD sensor 20, a logic processing unit 83 (which performs functions performed by SH 139, ADC 130, and ASIC 10), memory 60, communication interface 84, all preferably integrated in a single computer chip 70, which I call a System On A Chip (SOC) 70. This system reads data directly from the sensor 20. In one embodiment, the sensor 20 is integrated on chip 70, as long as the sensing technology used is compatible with inclusion on a chip, such as a CMOS sensor. Alternatively, it is separate from the chip if the sensing technology is not capable of inclusion on a chip. The data from the sensor is preferably processed in real time using logic processing unit 83, without being written into the memory 60 first, although in an alternative embodiment a portion of the data from sensor 20 is written into memory 60 before processing in logic 83. The ASIC 10 optionally can execute image processing software code. Any sensor 20 may be used, such as CCD, CMD or CMOS sensor 20. The memory 60 may be any form of memory suitable for integration in a chip, such as data Memory and/or buffer memory. In operating this system, data is read directly from the sensor 20, which increases considerably the processing speed. After all data is transferred to the memory 60, the software can proceed to extract data from both Gray scale image data 210 and Run Length Code (RLC) in RLC memory 211. In one embodiment, both the Gray scale image data 210 and the Run Length Code (RLC) are extracted before calling the decode software 88, as illustrated diagrammatically in FIG. 8(c). An advantage of the disclosed example is that the image processing does not use binary data exclusively. Instead, the disclosed example also considers data extracted from the "double taper" and data bank 30 to locate the area of interests and also it uses the gray scale to enhance the decodability of the symbol found in the frame as shown in FIG. 8(c) (particularly for one dimensional and stacked symbology) using the sub-pixel interpolation technique as described in the image processing section).

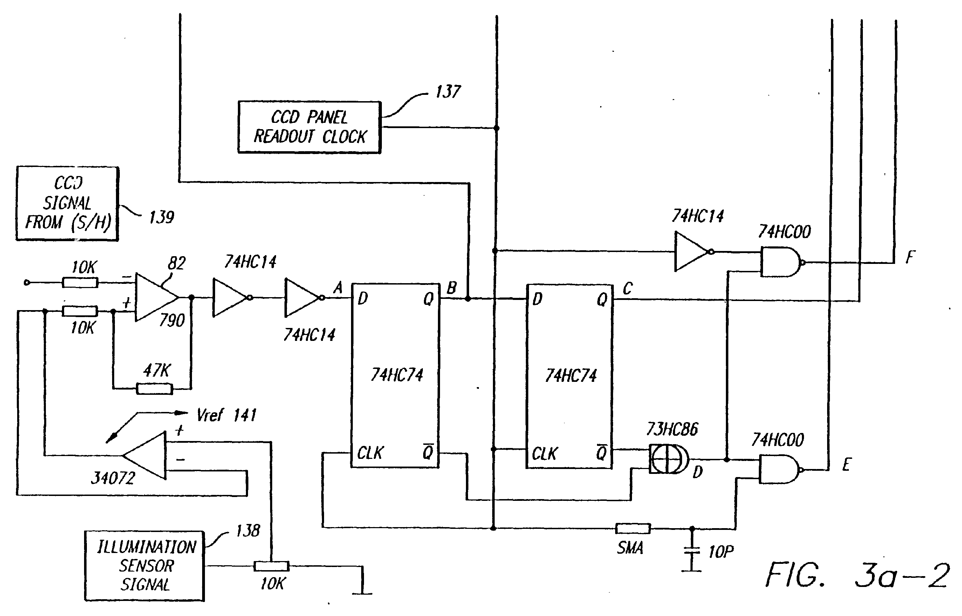

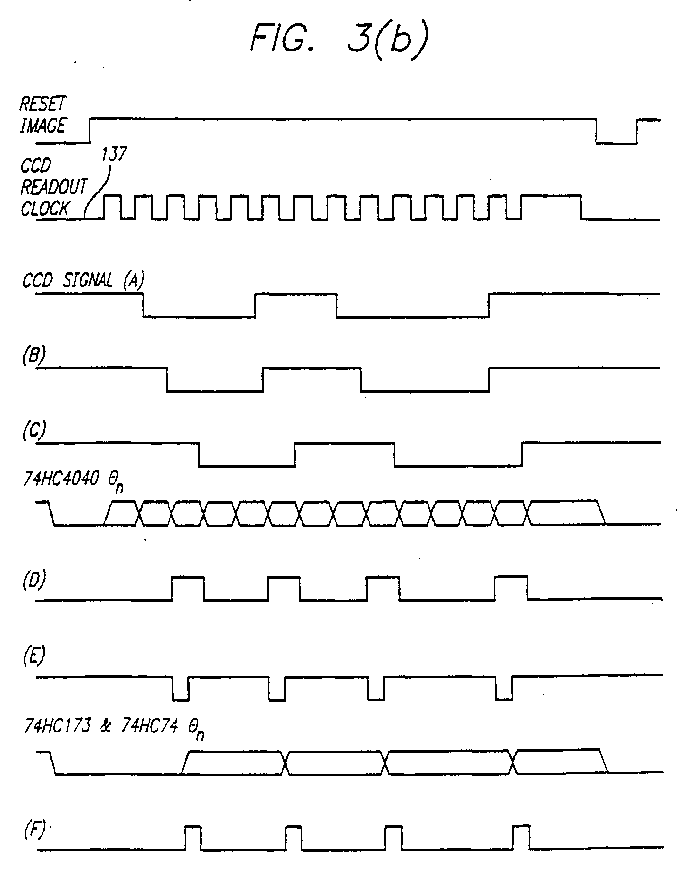

FIGS. 2(a) and 3(a) illustrate one example of a hardware implementation of a binary processing unit 120 and a translating RLC unit 213. It will be appreciated that the binary-processing unit 120 may be integrated on a single unit, as in SOC 70, or may be constructed of a greater number of components. FIG. 3(a) provides an exemplary circuit diagram of binary processing unit 120 and a translating RLC unit 213. FIG. 3(b) illustrates a clock timing diagram corresponding to FIG. 3(a).

The binary processing unit 120 receives data from sensor (i.e. CCD) 20. With reference to FIG. 8(d), an analog signal from the sensor 20 (Vout 125) is provided to a sample and hold circuit 139. A Schmitt Comparator is provided in an alternative embodiment to provide the RLC (run length code) at the DMA (direct memory access) sequence into the memory as shown in FIG. 8(d). In operation, the counter 135 transfers numbers, representing X number of pixels of 0 or 1 at the DMA sequence instead of "0" or "1" for each pixel, into the memory 60 (which in one embodiment is a part of FPGA or ASIC 10). The Threshold 214 and RLC 213 functions preferably are conducted in real time as the pixels are read (the time delay will not exceed 30 nano-second). The example, using a Fuzzy Logic software, uses RLC to read DataMatrix code. This method takes 125 m sec. If we change the Fuzzy Logic method to use pixel by pixel reading from the known offset addresses which will reduce the time to approximately 40 m sec. in this example. It is noted that "m sec" refers to milli seconds. This example is based on an apparatus using an SH-2 micro-controller from Hitachi with a clock at around 27MHz and does not include any optimization both functional and time, by module. Diagrams corresponding to this example provided in FIGS. 2(a), 3(a) and 3(b), which are described in greater detail below. FIG. 2(a) illustrates a hardware implementation of a binary processing unit 120 and a translating RLC unit 213. An example of circuit diagram of binary processing unit 120 outputting data represented with reference number 81b, and a translating RLC unit 213 is presented in FIG. 3(a), outputting data represented with reference number 81a. FIG. 3(b) illustrates a clock timing diagram for FIG. 3(b).

It is an advantage of present invention to simultaneously provide gray scale data 210, to determine the threshold value such as by using the Schmitt Comparator 82 and to provide RLC 81 of the exemplary embodiment discussed in this description. In a specific example, the gray scale data, threshold value determination and RLC calculation could be all accomplished in 33.3 milli-second, during the DMA time, in the illustrated embodiment of the present invention.

As used in this description, a gray scale value is the digital value of a pixel's analog value, which can be between 0 and 255 levels for an 8 bit ADC 130. The gray scale data was obtained in this example after the analog Vout 125 of sensor 20 is sampled and hold by DSH 139. The analog signal was converted to gray scale data by passing through ADC 130. The output 50 is then connected to the ASIC or FPGA 10 to be transferred to memory 60 during the DMA sequence.

Also as used in this description, a binary value is a digital representation of a pixel's gray scale value, which can be "0" or "1" when compared to a threshold value. A binary image 219 was obtained from gray scale image data 210, after the threshold unit 214 has calculated the threshold value. A run length code (RLC) as used in this description is a representation of a succession of multiple pixels with a value of "0" or "1". In the invention described herein, memory space and processing time are reduced by overlapping the running of the RLC with reading pixel values and DMA processing.

These results are achieved, for example, in the embodiment illustrated in FIG. 2(a). The analog pixel values are read from sensor 20 and after passing through DSH 139, ADC 130 are stored in memory 60. At the same time, during the DMA, the binary processing unit 120 receives the data and calculates the threshold of net-points (a non-uniform distribution of the illumination from the target 510 causes a non-even contrast and light distribution in the image data 210). Therefore a conventional, known real floating threshold binary algorithm will take a long time. To overcome this inferior distribution of the light, particularly in the hand held optical scanner 15, it is an advantage of present invention to use a floating threshold curve surface technique, such as described in *Computer Graphics*, Vol. 25, No. 4 (July 1991), ACM SIGGRAPH, Papers Chair Thomas W. Sederberg. As illustrated in FIG. 2(b), the gray scale image data 210 includes information corresponding to "n" lines, vertically 351 and horizontally 352 (*i.e*., 20 lines, represented by 10 rows and 10 columns). There is the same space between each two lines. Each intersection of vertical and horizontal line 353 is used for mapping the floating threshold curve surface 354. A deformable surface is made of a set of connected square elements. Square elements were chosen so that a large range of topological shape could be modeled. In these transformations the points of the threshold parameter are mapped to corners in the deformed 3-space surface. The threshold unit 214 uses the gray scale values on the line for obtaining the gray sectional curve and then it looks at the peak and valley curve of the gray section. The middle curve of the peak curve and the valley curve would be the threshold curve for this given line. As illustrated in FIG. 2(c), the average value of the vertical 355 and horizontal 356 threshold on the crossing point would be the threshold parameter for mapping the threshold curve surface. Using the above-described method, the threshold unit 214 calculates the threshold of net-points for the image data 210 and store them in the memory 60 at the location 219.

After the value of the threshold is calculated for different portions of the image data 210, the binary processing unit 120 generates the binary image 219, by thresholding the gray scale image data 210. At the same time, the translating RLC unit 213 creates the RLC to be stored in memory 211.

FIG. 3(a) provides a circuit diagram or an alternative embodiment for obtaining RLC in real time. The Schmitt Comparator 82 receives the signal from DSH 139 on its negative input and the Vref. 141 representing a portion of the signal which represents the illumination value of the target 510, captured by illumination sensor 138, on its positive output. Vref. 141 would be representative of the target illumination, which depends on the distance of the imager 15 from the target 510. Each pixel value is compared with the threshold value and will result to a "0" or "1" compared to a variable threshold value which is the average target illumination. The counter 135 will count (it will increment its value at each CCD pixel clock 137) and transfer to the latch 136, each total number of pixel, representing "0" or "1" to the ASIC 10 at the DMA sequence instead of "0" or "1" for each pixel. FIG. 3(b) is the timing diagram representation of circuitry illustrated in FIG. 3(a).

A run length code (RLC) can be a representation of a succession of multiple (X) number of pixels with a value of "0" or "1". It is easily understandable that memory space and processing time can be considerably optimized if RLC can take place at the same time that pixel values are read and DMA is taking place. FIG. 2(a) represents an alternative for the binary processing and RLC translating units for a high speed optical scanner 15. The analog pixel values are read from sensor 20 and after passing through DSH 139, ADC 130 are stored in memory 60. At the same time, during the DMA, the binary processing unit 120 receives the data and calculates the threshold of net-points (a non-uniform distribution of the illumination from the target 510, causes a non-even contrast and light distribution represented in the image data 210. The gray scale image data 210 includes data representing "n" scan lines, vertically 351 and "m" scan lines horizontally 352 (for example, 20 lines, represented by 10 rows and 10 columns). There is the same space between each two lines. Each intersection of vertical and horizontal line 353 is used for mapping the floating threshold curve surface 354.

### Gray Scale Image Processing

The Depth of Field (DOF) Chart of an optical scanner 15 is defined by a focused image at the distances where a minimum of less than one (1) to three (3) pixels is obtained for a Minimum Element Width (MEW) for a given dot used to print the symbology, where the difference between a black and a white is at least 50 points in a gray scale. The sub-pixel interpolation technique allows the decode of a MEW down to less than one (1) pixel instead of 2 to 3 pixels, providing a perception of "Extended DOF". This method is described below to obtain an orientation free reading capabilities by the Image Grabber.

An example of operation of the present invention is illustrated in FIGS. 8(e) and 8(f). As illustrated there, as a portion of the data from the CCD 20 is read, the system looks for a series of coherent bars and spaces, as illustrated with step 220 The system then identifies text and/or other type of data in the image data 210, as illustrated with step 221 The system then determines an area of interest, containing meaningful data, in step 230. In step 240, the system determines the angle of the symbology using a checker pattern technique or a chain code technique, such as for example finding the slope or the orientation of the symbology 27, 28, 29 within the target 510. The system then uses a sub-pixel interpolation technique to reconstruct the optical code 381 or symbology code 381 in step 250. In exemplary step 260 a decoding routine is then run. It is important to note that at all time, data inside of the Checker Pattern Windows 380 are conserved to be used to identify other 2D symbologies or text if needed.

The Interpolation Technique uses the projection of an angled bar 381 or space by moving x number of pixels up or down to determine the module value corresponding to the minimum element width (MEW) and to compensate for the convolution distortion as represented by reference number 382. This method allows to reduce the MEW of pixels to less than 1.0 pixel for the decode algorithm versus 2 to 3 normally required.

### Illumination

An exemplary optical scanner 15 incorporates target illumination device 72 operating within visible spectrum. In a preferred embodiment, the illumination device includes plural LEDs (light emitting diodes). Each LED preferably has a peak luminous intensity of *i.e.,* 6.5 lumens/steradian (for a HLMT-CL00) with a total field angle of 8 degrees, although any suitable level of illumination may be selected. In the preferred embodiment, three LEDs are placed on both sides of the lens barrel and are oriented one on top of the other such that the total height is approximately 15 mm. Each set of LEDs could be disposed with a holographic optical element which serves to homogenize the beam and to illuminate a target area corresponding to the wide field of view.

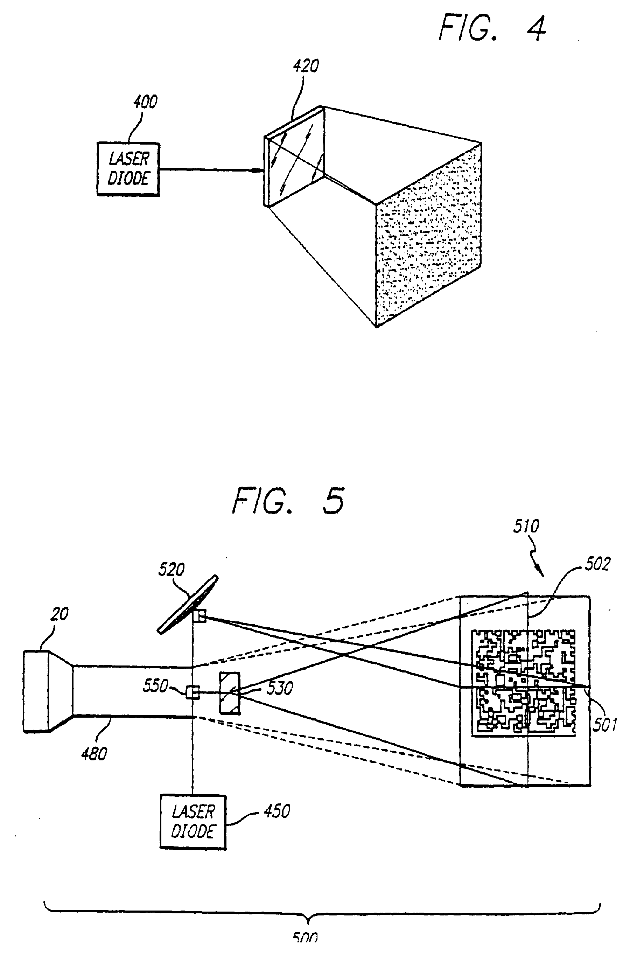

FIG. 4 indicates an alternative illumination system to illuminate the target 510. Any suitable light source 410 can be used, including a flash light (strobe), halogen light (with collector/diffuser on the back) or a battery of LEDs mounted around the lens system (with or without collector/diffuser on the back or diffuser on the front) making it more suitable because of the MTBF of the LEDs. A laser diode spot 400 also can be used combined with a holographic diffuser to illuminate the target area called the Field Of View. (This method is described in my previous applications, listed before and incorporated by reference herein. Briefly, the holographic diffuser 420 receives and projects the laser light according to the predetermined holographic pattern angles in both X and Y direction toward the target as indicated by FIG. 4).

### Frame Locator

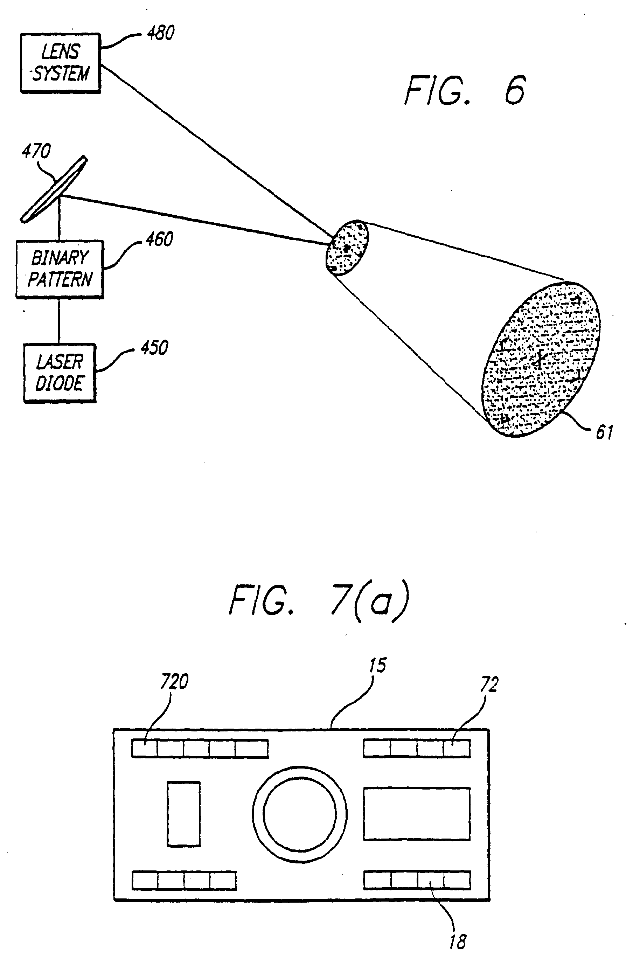

FIG. 6 illustrates an example of an alternative apparatus to frame the target. The Frame locator can be any Binary optics with pattern or Grading. The first order beam can be preserved to indicate the center of the target, generating the pattern 61 indicating four corners and the center of the aimed area as shown in FIG. 6. Each beamlet is passing through a binary pattern providing "L" shape image, to locate each corner of the field of view and the first order beam was locating the center of the target. A laser diode 450 provides light to the binary optics 460. A mirror 470 may be used to direct the light, or alternatively a mirror is not used. Lens system 480 is provided as needed.

In an alternative example as shown in FIG. 5, the framing locator mechanism 500 utilizes a beam Splitter 550 and a mirror 520 or diffractive optical element that produces two spots. Each spot will produce a line after passing through the holographic diffuser 530 with an spread of 1°x30° along the X and/or Y axis, generating either a horizontal line 501 or a crossing line 502 across the filed of view, indicating clearly the field of view of the zoom lens. The diffractive optic is disposed along with a set of louvers or blockers which serve to suppress one set of two spots such that only one set of two spots is presented to the operator.

Another example is illustrated in FIG. 7(a). We could also cross the two parallel narrow sheets of light (as described in my previous applications and patents as listed above) in different combinations Parallel on X or Y axis and centered, left or right positioned crossing lines when projected toward the target, illustrated by patterns 73a and 73b in FIG. 7(b).

### Binarization of the Multi-bit Digital Images

Binarization is the process of converting a gray scale image to a binary representation. In the binarization process, a threshold is determined and then compared to each pixel in the image. Pixels above the threshold are represented by a "1", while pixels below the threshold are "0". In a graphical sense, the 1's may be represented as white, while the 0's may be represented as black. Thus, a multi-bit gray-scale image can be compressed and represented by the binarization process. Using known binarization techniques, the multi-bit image is first passed into a memory and then a minimum and maximum value determined, with an average of the minimum and maximum being set as the threshold value.

Unfortunately, generating the binary data as described above is a time consuming process. For example, the minimum and maximum values cannot be determined until the entire image data has been transferred from the optical sensor into memory Accordingly, conventional image processors may take considerable time in generating binary data, and in decoding any symbology. Further, generating a binary data image according to the conventional known method loses substantial detail, and is susceptible to optical and electrical disturbances. Since a single threshold value is used for the entire multi-bit image, detail may be lost in areas of the image that are particularly bright or dark. Accordingly, binarization has not been considered a viable and efficient solution to quickly and accurately decoding symbology.

However, in another example in accordance with the present invention, binarization is successfully used to more quickly and efficiently decode symbology in multi-bit image data. According to the embodiment, multi-bit digital image data from an image sensor is stored in a memory while also being converted into binary image data and run length encoded data. In order to facilitate this conversion, threshold values are calculated. By efficiently generating such thresholds, the overall time to decode symbols is reduced. Further, the threshold value is calculated in a manner to reduce loss of image detail and minimize susceptibility to distrubances.

A threshold is generated for every pixel as part of a binarization technique. Pixel values larger than or equal to this threshold result in a binary 1 being generated, while pixel values less than the threshold result in a 0 being generated. This binary data is then sent to binary image storage and run-length encoding units for further processing.

The thresholds for each pixel are computed by interpolating between key-thresholds that are computed for certain areas of the image. In one embodiment, the image can be divided into overlapping segments or windows of a certain size, for example 32 pixels by 32 pixels. It will be appreciated that other sizes of windows may be substituted. Also, the size of these segments or windows may be a programmable value. Preferably, each of the windows or segments overlaps an adjacent window or segment by 50%. For example, with the segment size set to 32x32, overlapping segments start every 16 pixels. It will be appreciated that other overlap patterns can be used.

For each segment, a key-threshold is calculated for the pixel at the center of the segment. If using a 32x32 segment scheme, key-thresholds are thereby computed for data image pixels having x-y locations at, for example: (16;16), (32;16), (48;16), ..., (16;32), (32;16), ..., (16;48), (32;48), and so on. Accordingly, a key-threshold is defined at the corner of each 16x16 block of pixels of the data image as a result of the overlapping segments.

A threshold for each pixel within each block can be calculated using a weighted average of the corner key-threshold values as determined by the distance of the pixel from the various comers. Alternatively, it is also possible to set a more general threshold for the 16x16 block by averaging the key-threshold values from the corner of the block. Accordingly, each pixel may have an independently generated threshold, or all pixels in each 16x16 block may use the same threshold. It will be appreciated that individual pixel threshold may be determined from the key threshold values in alternative ways.

The generation of thresholds as described above may begin well before the output of the entire image from the sensor. In such a manner the threshold calculation starts with the first pixel coming from the imager and calculations continue while the imager continues to deliver data. Because the imager normally outputs the data line by line, it is not possible to finish one block before the next block begins unless the imager is using a windowing mode. Therefore, by the time a portion of the image equivalent to the size of the overlapping segment is read out from the imager, the first set of key-thresholds will be generated. In the example used above, this would mean that the key-thresholds for the first row of overlapping segments will be generated soon after the 32nd line of image data is transferred from the image sensor. Immediately after the key-thresholds are determined for a block, the individual pixel threshold can be then be calculated. In such a manner, the conversion can be initiated on the received portions of the image data without waiting for all the image data to be received. Accordingly, the process of generating binary data is quickly and efficiently performed.

In one embodiment, the key-thresholds are computed by generating a histogram and then calculating a low and a high value from this histogram and performing a weighted addition to generate the threshold (key threshold = low * a + high * (1-a), where a is a programmable constant). To be more secure from disturbance, the low and high values preferably ignore the extreme values in the darkest and lightest part of the histogram. Alternatively, the threshold value may be generated by taking an average of the low and high values (i.e. a = 0.5) rather than using a programmable weighting. In order reduce the dependence of the threshold on extreme values, the low and high values are obtained by skipping a programmable number of histogram values from the bottom and top of the histogram. In a preferred example, the largest 51 and the smallest 51 points are ignored,

In certain cases, a structure capable of being converted to binary values will be absent from the image. This will result in the difference between the high and low values being in the range of the noise level of the image sensor. This result can be corrected in alternative manners. For example, the key-threshold may be interpolated from the nearest neighboring key-threshold. The key-threshold may also be set to zero or the maximum value (256 in our example of 8 bit digital image data) dependent on the background being light or dark. These solutions can also be applied to generate key-thresholds at the perimeter of the image. For example, they could be used to generate key-thresholds for pixels at locations (0, 0), (0, 16), and (16, 0).

The binary image is stored at a programmable location. Dummy bytes for alignment purposes may be necessary so that the beginning of each line starts at a start-of-cache-line location.

Instead of the flow-through mode of operation implicitly described, separate steps may be employed for storing the multi-bit digital image, computing histograms on the fly, and binarizing the image. This would require a very fast memory interface.

### Example of Implementation

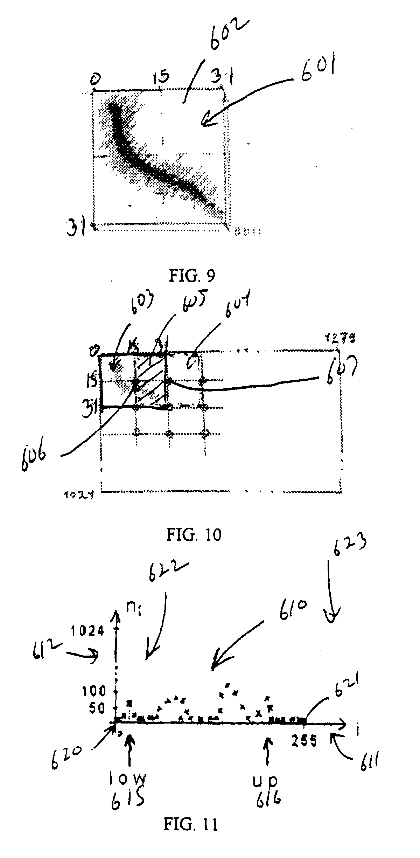

Referring now to FIGS. 9 - 14, an example illustrating the generation of a black & white picture from 8 bit deep multi-bit digital image 601 is shown. The digital image is output in a format having an x-y coordinate system. The digital image may be segmented into overlapping window segments, with each segment representing a 32 pixel by 32 pixel block 602 or portion of image data. For example, Fig. 10 shows a first 32x32 segment 6093 and a second 32x32 segment 604 (dotted line). The hashed area 605 represents an overlap between the first segment 603 and the second segment 604. Pixel 607 is in the center of the first segment 603, while pixel 607 is in the center of the second segment 604. In the illustrated example, key threshold values are calculated to facilitate efficiency and speed. As described above, a key threshold value is calculated using a 32x32 multi-bit digital pixel block 603 and 604, with each block having x-axis coordinates ranging from 0 to 31 and y-axis coordinates ranging from 0 to 31. It will be appreciated that other window sizes may be substituted.

The key threshold calculation associated with every 32x32 pixel window 603 and 604 generates one key threshold value, which is placed at the center pixel 606 and 607 of each 32x32 block. For each successive key threshold calculation, the 32x32 window moves 16 pixels, so there is an overlap for each calculation. Accordingly, a key threshold value is generated and positioned every 16 pixels in the x and y direction.

In one example of calculating a key threshold value, each 32x32 block, such as block 603, is reorganized into a histogram 610. Each 32x32 block has 1024 pixels, with each pixel being an 8 bit binary number between 0 and 255. The histogram is organized with an x-axis 611 representing the decimal value of pixel data, and the y-axis 612 representing the number of pixels. Accordingly, the multi-bit digital value of each pixel is represented in the histogram by presenting the number of pixels at each decimal value. In one example, a pure black (every pixel has a value of 0) picture there would be only one register of the histogram counted up to 1024 (one for each pixel). All other registers of the histogram would be zero. In another example, for a normal image, the 1024 pixels would be arranged more sporadically between the 256 registers.

Using the histogram 610, a low 615 and a high 616 value is determined. In the preferred embodiment, the low value 615 is not the darkest pixel 620, which would be the absolute minimum value represented in the histogram, and the high value 616 is not the brightest 621, or the absolute maximum value represented in the histogram. Instead, the low and high value are selected to reduce disturbances such as electrical or optical disturbances. In such a manner, the low value and the high value should ignore the darkest 622 and lightest 623 part of the histogram 610, which each may constitute up to 5% of the image data.

Since each 32x32 block has 1024 pixels, 5% of the image data is 51 pixels. Therefore, in order to ignore the 5% of the image data that constitutes the extreme values, the 51 darkest (smallest) and the 51 brightest (largest) pixels must be found. The low value is set at the histogram value where the 51^{st} smallest data point is found, and the high value is set at the histogram value where the 51^{st} largest data point is found. For example, if smallest data points in the histogram are as follows:
12 points at a value of 25;
23 points at a value of 31; and
36 points at a value of 34;
then the low value will be set to 34, as the 51^{st} smallest point is in the "34" register of the histogram. In a similar manner, if the largest data points in the histogram are as follows:
6 points at a value of 235 and
234 points at a value of 230;
then the high value will be set to 230, as the 51^{st} largest point is in the "230" register. It will be appreciated that other number of extreme image values may be ignored and still retain the benefit of reduced susceptibly to disturbances.

In the preferred embodiment, with the low and high value determined, the key threshold value for each 32x32 block is calculated as follows:

Threshold = a * low + (1-a) * high; where "a" is normally set to about 50%. Of course, it will be appreciated other values of "a" are possible. Accordingly, if "low" is determined to be 34, and "high" is determined to be 230, if "a" is set to 50%, then the key threshold is calculated to be 132.

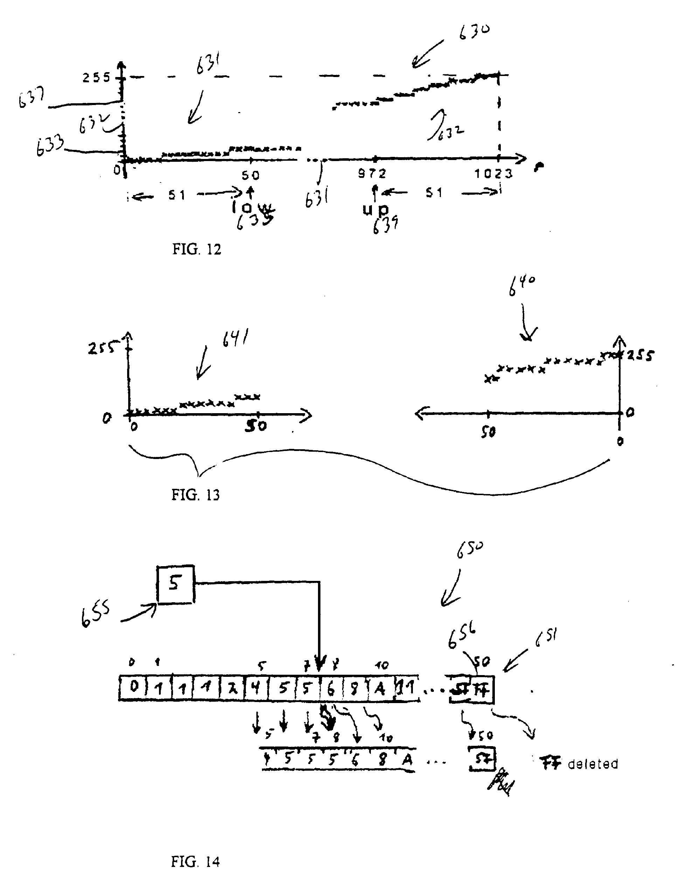

There are also alternative methods that can be used to determine the low and high values. Instead of using a histogram, it is also possible to reorganize the data from one 32x32 window. A sorting algorithm may be used to arrange the data in a graph 630 so that the dark pixels 631 would be placed to the left and the light pixels 632 would be placed to the right as shown in FIG. 12. In the graph 630, the x-axis 631 represents the pixel number, and the y-axis 632 represents the data value of each respective pixel. The low value 633 then can be read as the y-axis value at x-axis point 50 (the 51^{st} smallest point) 635, and the high value 637 can be read as the y-axis value at x-axis point 972 (the 51^{st} largest point 639). It will be appreciated that other organizational methods may be used.

Using the above-described method, it is not necessary to store all of the image pixel data for the low and high calculation. Instead, only the 51 highest 640 and 51 lowest 641 multi-bit digital values would need to be stored during the calculation, as illustrated in FIG. 13. If only these values are stored, a sorting algorithm, such as a bubble sort algorithm is preferably used to organize and select the retained data points. Referring to Fig. 14, a simple and efficient sort algorithm 650 is illustrated. In the algorithm 650, 51 registers are assigned to hold low values 651, and 51 registers are assigned to hold high values (not shown). When a new value is received, the new value 655 is discarded if larger that the value in the 51^{st} register 656, but if the new value 655 is smaller than the value in the 51^{st} register, then the new value is placed in the register 651 in an ascending order thereby shifting any larger values. Accordingly, the value in the 51^{st} register is discarded and the value previously in the 50^{th} register moves to the 51^{st} register. Preferably, the sorting algorithm is implemented in a manner that enables the sorting and processing of one pixel in less time than the reading time of one pixel from the imager (for example, at a 10 MHz read cycle, sorting each pixel should take less than about 100 ns). After the processing of the full 32x32 block, the 51 darkest and 51 lightest values will be used to determine the low and high values, which in turn are used to generate a key threshold for the block.

It will be appreciated that according to the method for calculating thresholds described above, every pixel (except the pixels within 16 points of the edge of the image data) will be read 4 times due to the overlap of the windows. It will be understood that other methods may be used to calculate a high threshold for each segment.

An alternate method of calculating thresholds would be to perform the threshold calculation with 16x16 block windows without overlap. Later a routine can recalculate this data to determine the key-thresholds for the 32x32 windows. It will be appreciated that other alternatives may be used to calculate key thresholds.

Although the binarization process as descried above contemplates the use of a standard CCD sensor, it will be appreciated that the process may be advantageously used with other sensor technologies and at other resolutions. For example, the binarization process may be successfully used with CMOS imaging technology, where a CMOS imager is integrated with a with processing circuitry on a single integrated circuit chip.

With the describe image processor, binary date is generated in an efficient manner, with the binarization process proceeding as image data is still being received from the image sensor. Accordingly, the disclosed image process is faster and more efficient than known image processors. Further due to calculating key thresholds and ignoring of extreme image data, the binary data is less susceptible to information loss and disturbances.

### Run-Length-Encoding

In addition to generating binary data, run length data may also be calculated. Preferably, the run length data is generated in parallel to the binarization process. The run-lengths are preferably stored as multi-bit unsigned integers. Every line of the image is handled separately. The run-lengths of each line are stored subsequently in one memory area. A number of dummy run-length codes may be inserted at the end of each line to allow for better alignment.

In one embodiment, another memory area holds an array of addresses pointing to the corresponding run-length sequence stored in the run-length memory block. One bit of each address may be specified to hold the binary value of the image pixels being encoded. The run-length memory block has a programmable size. An error flag is generated that stops the run-length encoding if the memory block is not large enough to hold all of the values.

It may not be necessary to have a separate address memory block. Instead, an unsigned integer value could be written immediately behind the corresponding run-lengths stating the number of run-lengths for that line. In this case, the dummy run-length codes would not be used.
Example:

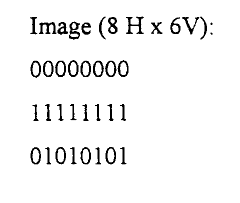

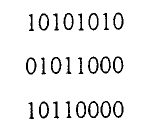

Run-Length memory block (assume address 0x1234000; all 16 bit data is stored sequentially, the line breaks are for illustration only):

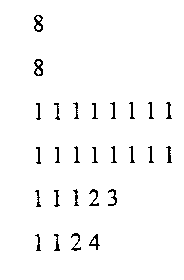

Address array memory block:
0x12340000 (bit 0 is 0)
0x12340003 (bit 0 is 1)
0x12340004 (bit 0 is 0)
0x12340015 (bit 0 is 1)
0x12340024 (bit 0 is 0)
0x1234002F (bit 0 is 1)

Accordingly, the run length data may be utilized to more quickly and efficiently determine thresholds, identify an area of interest, or determine a type of symbology used.

### Run Offset Encoding

In another embodiment, a run offset encoding process is provided. A run offset encoding process is preferably performed in parallel with the binarization process described above, but it will be appreciated that it may be performed in a different sequence. The run offset encode process provides a view of the image data that enables, for example, the efficient and accurate determination of an area of interest and may be used to determine symbology type. Although similar to run length encoding described above, run offset encoding offers several key differences and advantages.

Run length encoding is not intended to be a compression method, but may provide limited compression in some circumstances. In run length encoding, the binary data is examined to locate positions that transition between states, with a run offset data point generated corresponding to each transition. The generated offset data points are then stored, for example, in a file. The file of run offset data thereby contains a series of transition data that indicate the coordinate position in the binary data file where transitions from 1 to 0 or from 0 to 1 occurred. Such transition data is useful in locating an area of interest or identifying a type of symbology, for example.

In a preferred embodiment, the offset data file comprises 16 bit data points, with the first bit of each data point representing a 1 state or a 0 state in the binary file. The next 15 bits represent the coordinate position where the state of the first bit is present in the binary file. Each row of data in the binary image file has a corresponding row of offset data in offset data file. For example, if a row of data in the binary file is all 1's, then the corresponding row in the offset data file will have only one 16 bit data point. That one data point will have a "1" as the first bit, and will have "000000000000000" in the next 15 bit locations, as the "1" occurred in the first position (the "0" position) in the row. At the other extreme, if every data point in a row of binary data alternates between 1 and 0, then the corresponding row in the offset data will have a 16 bit data point for every bit in the row of binary data. In a preferred embodiment, row information is collected in another file or table, although it will be appreciated that such information could also be incorporated into the run offset data file. The table below shows an example of run offset encoding.

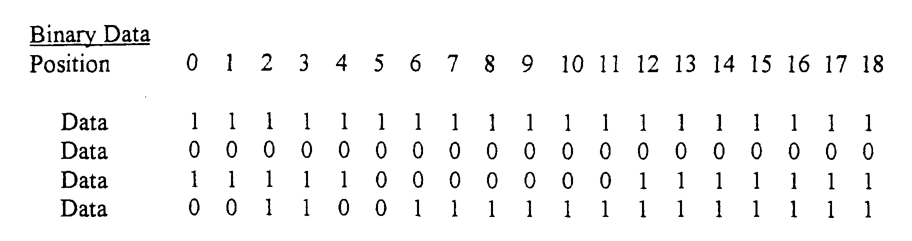

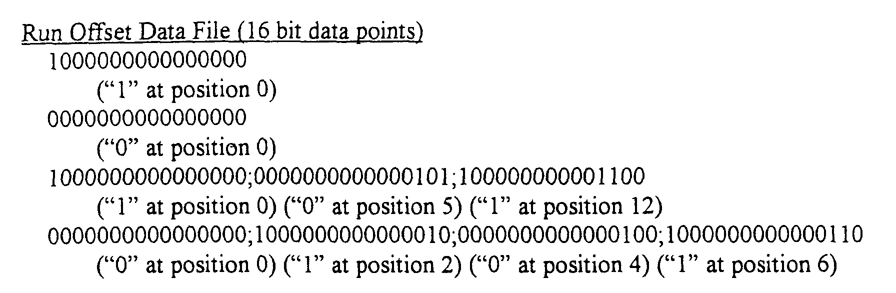

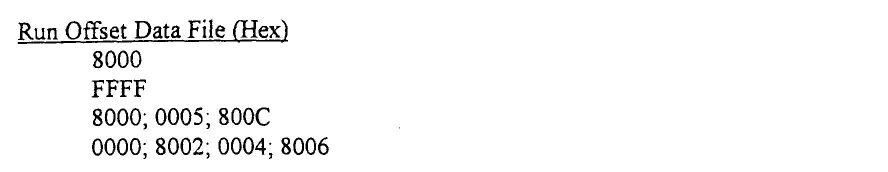

Using the run offset data as described above, the image processor is more quickly and efficiently able to identify transition points, and thus is enabled to more quickly and efficiently separate areas of the image that may contain information from background areas. Also, since the run offset data indicates the "color" or value of the binary data in each run, there is no need for the processor to serially track the binary value of a particular run. Accordingly, the workload for the processor is greatly reduced.

Although a particular embodiment of run offset coding is shown, it will be appreciated that alternatives may be substituted. For example, more or fewer bits can be used to represent the transition points, or the row information may be appended to each data point. It will also be appreciated that other numerical methods may be incorporated to extract transition information from a binary data stream or file.

Thus, it is seen that an optical scanner/image reader for reading images and decoding optical information or code, including one and two dimensional symbologies at variable depth of field, including memory and image processing for high-speed applications is provided. One skilled in the art will appreciate that the present invention can be practiced by other than the preferred embodiments which are presented in this description for purposes of illustration and not of limitation, and the present invention is limited only by the claims which follow. It is noted that equivalents for the particular embodiments discussed in this description may practice the invention as well.

## Claims

1. An apparatus for reading image information contained within a target image field, comprising:
a sensor including a plurality of pixels for sensing the target image, the sensor providing a signal representative of the image sensed by each pixel;
a converting unit for generating multi-bit digital image data from the sensor signal;
a compression unit that begins compressing the multi-bit image data after a portion of the multi-bit image data has been provided by the converting unit;
a processing unit for determining areas of interest within the target image based on the compressed data; and
a decoding unit for extracting information stored within at least one of the areas of interest.

2. The apparatus of claim 1 wherein the compression unit converts the multi-bit image data into binary image data as part of the compression process.

3. The apparatus of claim 2 wherein the compression unit that includes:
a windowing unit for dividing the image into overlapping segments;
an extreme value unit for setting a low value and a high value for each segment using the multi-bit data from each respective segment; and
a segment thresholding unit for calculating a threshold for each segment by taking a weighted average of the low and high value.

4. The apparatus of claim 3 wherein the compression unit further includes a pixel thresholding unit for generating a threshold for each pixel within a block based on a weighted average of thresholds calculated for segments overlapping that block.

5. The apparatus of claim 3 wherein the extreme value unit includes:
a threshold determination unit for generating a histogram from the multi-bit image data, said binarization processor skipping a predetermined number of histogram values from the bottom of the histogram to set the low value and skipping a predetermined number of histogram values from the top of the histogram to set the high value.

6. The apparatus of claim 5 wherein the predetermined number is a programmable value.

7. The apparatus of claim 3 wherein the extreme value unit includes:
a sorting unit for generating 2 groups of pixels values;
the first group of pixel values containing a predetermined number of the darkest pixels;
the second group of pixel values containing a predetermined number of the lightest pixels; and
a threshold determination unit for setting the low value to be equal to a pixel value from the first group of pixel values and for setting the high value to be equal to a pixel value from the second group of pixel values.

8. The apparatus of claim 7 wherein the threshold determination unit sets the low value to be equal to the lightest pixel value from the first group of pixel values.

9. The apparatus of claim 7 wherein the threshold determination unit sets the high value to be equal to the darkest pixel value from the second group of pixel values.

10. The apparatus of claim 7 wherein the predetermined numbers are programmable.

11. The apparatus of claim 1 wherein the output of the compression unit is stored in memory.

12. The apparatus of claim 3 wherein the size of the overlapping segments is a programmable value.

13. The apparatus of claim 4 wherein the pixel thresholding unit calculates the weighted average based on the distance of the pixel from the corners of the block.

14. The apparatus of claim 3 wherein the segment thresholding unit begins calculating the threshold of a second segment prior to the completion of the threshold calculation for the first segment.

15. The apparatus of claim 3 wherein the segment thresholding unit sets the threshold for a particular segment by interpolating from neighboring segments when the difference between the low value and the high value falls below a certain level.

16. The apparatus of claim 3 wherein the segment thresholding unit sets the threshold for a particular segment to the opposite of the background value when the difference between the low value and the high value falls below a certain level.

17. The apparatus of claim 3 wherein the windowing unit divides the image into segments that overlap a specific amount of the neighboring segments.

18. The apparatus of claim 17 wherein the specific amount of the overlap is a programmable value.

19. The apparatus of claim 2 wherein the compression unit generates run length encoded data from the binary image data.

20. The apparatus of claim 19 wherein the run length encoded data is stored in memory.

21. The apparatus of claim 2 wherein the processing unit uses the binary image data to determine the areas of interest.

22. The apparatus of claim 19 wherein the processing unit uses the run length coded data to determine the areas of interest.

23. The apparatus of claim 2 wherein the processing unit is configured to generate run offset encoded data from the binary image data.

24. A method for reading image information contained within a target image field, said method comprising:
sensing the target image;
converting said sensed image into digital multi-bit image data;
processing at least a portion of the multi-bit image data to generate compressed image data;
selecting a decoding process responsive to the compressed image data;
using the selected decoding process to extract information stored in the :arget image.

25. The method of claim 24 wherein the compressed image data is generated by binarizing the multi-bit image data.

26. The method of claim 25 further including generating transition data responsive to the compressed image data.

27. The method of claim 26 where generating transition data includes generating run offset data.

28. The method of claim 24 further comprising the steps of:
dividing the image data into overlapping segments;
generating a high value and a low value for each segment using the multi-bit data;
calculating a threshold for each respective segment by using a weighted average of the low and high value.

29. An apparatus for decoding image information, comprising:
a sensor generating image data;
a processor performing the following steps:
receiving a portion of the image data;
determining a threshold value for the portion of the image data; and
generating bianarization data using the threshold value; and
a decoder receiving the binarization data.

30. The apparatus according to claim 29 wherein the threshold value for the portion of the image data is determined before all the image data is received by the processor.

31. The apparatus according to claim 29 wherein the image data is segmented into overlapping portions.

32. The apparatus according to claim 29 wherein the image data is multi-bit pixel data.

33. The apparatus according to claim 29 wherein the portion of the image data comprises a plurality of pixel data.

34. The apparatus according to claim 33 wherein the pixel data is arranged in an array of x pixels by y pixels.

35. The apparatus according to claim 29 wherein the processor segments the image data into a plurality of portions and calculates a key threshold value for each portion, with a plurality of the key threshold values being used to determine the threshold value.

36. The apparatus according to claim 29 wherein the determining step includes organizing the portion of the image data into a histogram

37. The apparatus according to claim 36 wherein a part of the image data at an extreme end of the histogram is not used in calculating the threshold value.

38. The apparatus according to claim 37 wherein the part not used is the brightest image data.

39. The apparatus according to claim 37 wherein the part not used is the darkest image data.

40. The apparatus according to claim 37 wherein the histogram is used to select a high value and a low value, and the processor uses the high value and the low value in determining the threshold value.

41. The apparatus according to claim 29 wherein the determining step includes sorting the image data by value.

42. The apparatus according to claim 41 further including the step of selecting a high value and a low value, with the high value not being the maximum value in the image data, and the low value is not the minimum value in the image data.

43. The apparatus according to claim 29 wherein the processor further performs the step of generating transition data from the bianarization data.

44. The apparatus according to claim 43 where the generated transition data is in the form of run offset data.

45. The method of using an image process, comprising the steps of:
receiving image data;
dividing the image data into segments, at least one of segments being complete before all of the image data is received;
determining a key threshold for the complete segment;
generating a pixel threshold using the key threshold; and
applying the pixel threshold to a pixel in the completed segment.
